# EUROPÄISCHE PATENTSCHRIFT

(11) **EP 0 953 748 B1**
(45) Veröffentlichungstag und Bekanntmachung des Hinweises auf die Patenterteilung: **28.01.2004**
(21) Anmeldenummer: 98810378.4
(22) Anmeldetag: 28.04.1998
(51) Int. Cl.: F02C 3/34, F01K 21/04, F02C 3/20

(54) **Kraftwerksanlage mit einem CO2-Prozess**
Power plant with a CO2-cycle
Centrale d'énergie avec un cycle de CO2

(43) Veröffentlichungstag der Anmeldung: 03.11.1999
(73) Patentinhaber: ALSTOM (Switzerland) Ltd, 5401 Baden (CH)
(72) Erfinder: Frutschi, Hans Ulrich, 5223 Riniken (CH); Wettstein, Hans, Dr., 5442 Fislisbach (CH)

(56) Entgegenhaltungen:
- WO-A-95/02115
- WO-A-97/44574
- DE-A- 3 643 401
- DE-A- 4 303 174
- FR-A- 2 202 231
- US-A- 4 498 289
- US-A- 5 175 995
- PATENT ABSTRACTS OF JAPAN vol. 017, no. 080 (M-1368), 17. Februar 1993 & JP 04 279729 A (MITSUBISHI HEAVY IND LTD), 5. Oktober 1992
- YULIN SHAO ET AL: "NATURAL GAS FIRED COMBINED CYCLE POWER PLANT WITH CO2 CAPTURE" ENERGY CONVERSION AND MANAGEMENT, Bd. 36, Nr. 12, 1. Dezember 1995, Seiten 1115-1128, XP000529061

## Beschreibung

### Technisches Gebiet

Die vorliegende Erfindung betrifft eine Kraftwerksanlage gemäss Oberbegriff des Anspruchs 1.

### Stand der Technik

Maschinen mit innerer Verbrennung verbrennen ihren Brennstoff in komprimierter Atmosphärenluft und vermischen ihre Verbrennungsgase inhärent mit dieser Luft und dem nicht ausgenutzten Restsauerstoff. Die fast immer kohlenstoffhaltigen Brennstoffe erzeugen dabei unter anderen CO₂, welches als Treibhausgas gilt. Die verbreitete Nutzung fossiler Brennstoffe setzt heute CO₂-Mengen frei, welche ein weltweit diskutiertes Risiko für das Weltklima darstellen. Es ist daher bereits eine intensive Suche nach CO₂-freien Technologien im Gange.
Die Energieversorgung ist heute von der Nutzung fossiler Brennstoffenergien in Maschinen mit innerer Verbrennung bestimmt, wobei die Entsorgung des stark verdünnten CO₂ in die Atmosphäre geschieht.

Die CO₂-Abscheidung aus den Abgasen mit Entsorgung durch Verflüssigung, Separation und Abschliessung von der Atmosphäre wäre naheliegend. Durch die grossen Volumenströme lässt sich aber ein solches Vorhaben nicht in die Praxis umsetzen.

Eine weitere bekannte Möglichkeit ist die Rezirkulation von abgekühlten Abgasen in die Ansaugung von Maschinen mit innerer Verbrennung. Dies kann in einem Ausmass geschehen, dass der Sauerstoff der Luft gerade aufgebraucht wird. In diesem Fall bleibt das Abgas aber immer noch mit dem Luftstickstoff vermischt und das CO₂-Abscheidungsproblem ist damit nur marginal verkleinert.
Des weiteren, alle luftbetriebenen Verbrennungsmaschinen erzeugen auch Stickoxide, welche als Luftschadstoffe wirken, und deren Entstehung mit kostspieligen Massnahmen bekämpft wird.

DE-A1-43 03 174 offenbart ein Verfahren und eine Anlage zum Erzeugen elektrischer Energie durch Verbrennen von vorzugsweise gasförmigen, fossilen Brennstoffen mit reinem Sauerstoff. Hierzu ist ein geschlossener Kreislauf mit mindestens einer Brennkammer, einer Gasturbine, einem zur Vorwärmung dienenden Abhitzekessel und Verdichtern zum Verdichten des Arbeitsmediums auf Brennkammerdruck vorgesehen, wobei im Kreislauf als Arbeitsmedium ein inertes Gas benutzt wird. Vorzugsweise wird als Arbeitsmedium Kohlendioxid und als Brenngas Erdgas verwendet.

US-A-4,498,289 offenbart eine Kraftwerksanlage mit einem Verdichter, einer Brennkammer, einer Gasturbine und mit einem CO₂-Kreislauf. Ähnliche Anlagen sind aus *Natural gas fired combined cycle power plant with CO2 capture*, Yulin Shao et al., Energy conversion and management, Bd. 36, Nr. 12, vom 1.12.1995, S. 1115 - 11128 und WO 97/44574 bekannt.

WO 95/02115 offenbart ein Verfahren zur Nutzung der in einem Kraftwerk anfallenden Abhitze.

### Darstellung der Erfindung

Hier will die Erfindung Abhilfe schaffen. Der Erfindung, wie sie in den Ansprüchen gekennzeichnet ist, liegt die Aufgabe zugrunde, bei einer Kraftwerksanlage der eingangs genannten Art das anfallende CO₂ umweltschonend zu entsorgen, gleichzeitig liegt hier der Erfindung die Aufgabe zugrunde, die ebenfalls anfallenden Luftstickoxide zu eliminieren, sowie die Wirkungsgradausbeute der Kraftwerksanlage zu maximieren.

Die erfindungsgemässe Schaltung zeichnet sich dadurch aus, das ihr innewohnende Potential betreffend das gekühlte Kreislaufmedium umzusetzen, indem die wichtigsten Aggregate dieser Kraftwerksanlage mit dem hier erfindungsgemäss zugrundegelegten Kreislauf in einem gemeinsamen Druckbehälter untergebracht werden. Damit lassen sich die sämtliche Kühlprobleme auf einfachste Art mit einer Maximierung des Wirkungsgrades lösen.

Vorteilhafte und zweckmässige Weiterbildungen der erfindungsgemässen Aufgabenlösungen sind in den weiteren Ansprüchen gekennzeichnet.

### Kurze Beschreibung der Zeichnungen

Im folgenden werden anhand der Zeichnungen Ausführungbeispiele der Erfindung näher erläutert. Alle für das unmittelbare Verständnis der Erfindung unwesentlichen Merkmale sind fortgelassen worden.

Es zeigen:
- Fig. 1: eine Schaltung eines Gasturbinenprozesses mit rekuperativer Abwärmenutzung und mit Turboverdichter,
- Fig. 2: eine weitere Schaltung weitgehend nach Fig. 1 aufgebaut, mit verschiedenen Erweiterungen im Bereich der Bereitstellung von Brennstoff und
- Fig. 3: eine weitere Schaltung gemäss Fig. 1, wobei die Wärmesenke durch eine weitere nachgeschaltete Wärmesenke betrieben wird.

Gleiche Elemente sind in den verschiedenen Figuren mit den gleichen Bezugszeichen versehen. Die Strömungsrichtung der Medien ist mit Pfeilen angegeben.

### Wege zur Ausführung der Erfindung, gewerbliche Verwendbarkeit

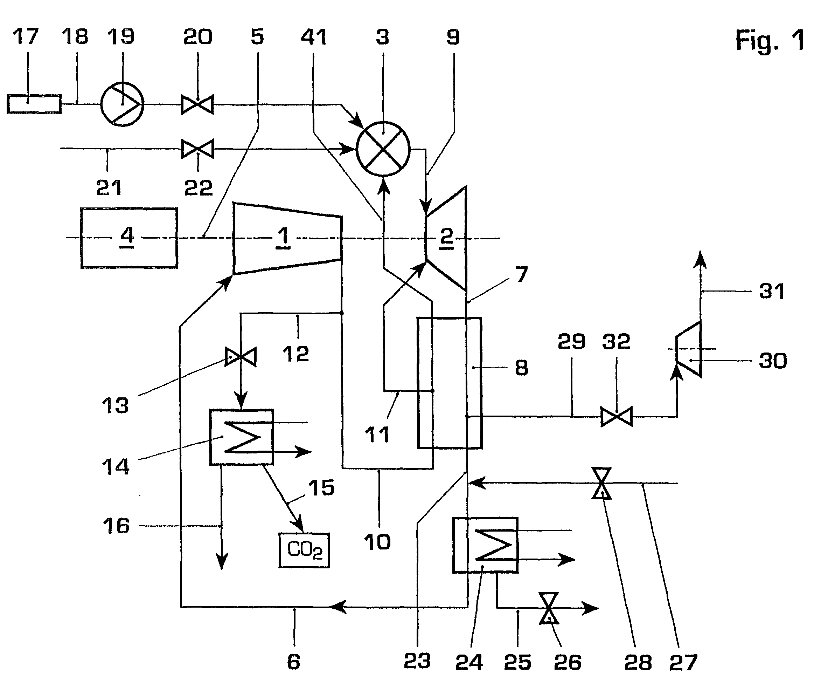

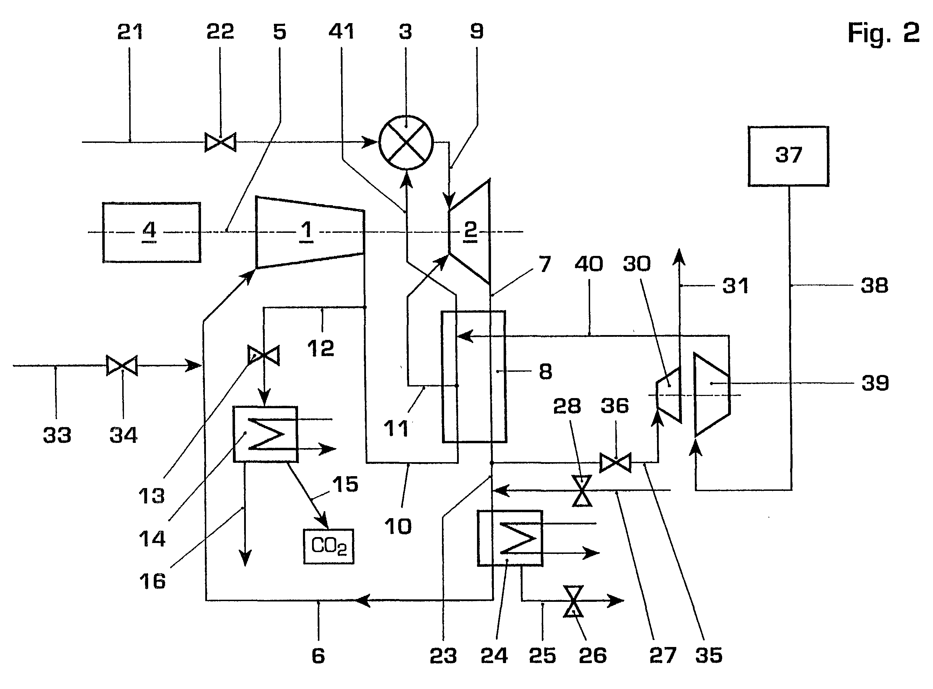

Fig. 1 zeigt eine Gasturbine mit geschlossenem Kreislauf. Diese Gasturbine bzw. Gasturbogruppe besteht aggregatenmässig aus einer Verdichtereinheit 1, einem mit dieser Verdichtereinheit gekoppelten Generator 4, einer mit der Verdichtereinheit gekoppelten Turbine 2, einer zwischen Verdichtereinheit 1 und Turbine 2 wirkende Brennkammer 3. Die Kopplung der Strömungsmaschinen 1 und 2 kann anhand einer gemeinsamen Welle 5 bewerkstelligt werden. Was die Verdichtereinheit 1 betrifft, so kann diese mit mindestens einem nicht näher gezeigten Zwischenkühler oder mit Mitteln für eine isotherme Kühlung ausgestattet sein. Die Vorteile, die sich aus einer solchen Schaltung mit Zwischenkühlung ergeben, betreffen den Wirkungsgrad und die spezifische Leistung. Das von der Verdichtereinheit 1 angesaugte Kreislaufmedium 6, das eingangsseitig der Verdichtereinheit 1 einen Druck von ca. 10 bar bei einer Temperatur von ca. 15° C aufweist, strömt nach erfolgter Kompression 10 in Gegenstromrichtung durch einen von den besagten Abgasen 7, weiche eine Temperatur von 780°-800° C aufweisen, beaufschlagten Rekuperator 8 und anschliessend in die Brennkammer 3, in welcher die kalorische Aufbereitung dieses Mediums zu Heissgasen 9 stattfindet, welche dann die Turbine 2 beaufschlagen. Über die Möglichkeit der Verdichtereinheit 1 eine Starthilfe zu geben, wird unter Fig. 2 näher behandelt. Zur Kühlung der thermisch hochbelasteten Aggregate der Gasturbogruppe, insbesondere der Turbine 2, wird eine Teilmenge 11 des verdichteten Mediums 10, nämlich CO₂, an geeigneter Stelle im Rekuperator 8 abgezweigt und zur Kühlung der genannten Aggregate, sei es in geschlossenen und/oder offenen Strömungspfaden, eingesetzt. Vorliegend ist hier lediglich die Kühlung der Turbine 2 angedeutet. Dieser Nebenstrom 11 liegt in der Grössenordnung von 4-8% des ganzen verdichteten Umlaufgases. Dieses Umlaufgas besteht, wie bereits angedeutet, überwiegend aus CO₂, enthält aber allenfalls auch noch parasitische Gase, welche mit dem Sauerstoff und Brennstoff sowie beim Anfahren mit Luft eingeschleppt worden sind, sowie Umwandlungsprodukte davon, beispielsweise NOₓ. Der Aufladungsgrad des geschlossenen Kreislaufes wird auf erwünschtem Niveau gehalten, indem intermittierend oder fortlaufend eine bestimmte Menge dieses Massenstromes an geeigneter Stelle abgezweigt und kondensiert wird. Vorliegend geschieht diese Umwandlung dadurch, dass eine bestimmte Menge 12 des verdichteten Kreislaufmediums 10 stromab des Verdichters 1 abgezweigt und durch einen Kühler 14 geleitet wird, in welchem diese Verflüssigung stattfindet. Nach erfolgter Kondensation wird dieser verflüssigte CO₂-Massenstrom 15 zur Entsorgung abgeführt, beispielsweise und/oder vorzugsweise auf dem Meeresgrund oder in eine ausgebeutete Erdgaslagerstätte.

Diese Entsorgung an geeigneter Stelle mit geeigneten Mitteln löst schlagartig und nachhaltig die Problematik des Treibhauseffekts durch den ständigen Ausstoss vom gasförmigen CO₂ in die Atmosphäre. Daneben werden die parasitischen Gase ebenfalls in Wirkverbindung mit dem genannten Kühler 14 ausgeschieden, wobei dieser sehr kleine Massenstrom 16 einer weiteren Separation unterworfen werden kann oder an die Atmosphäre abgegeben wird. Im Zusammenhang mit dem Betrieb der Brennkammer 3 wird die in einer Luftzerlegungsanlage 17 produzierte Sauerstoffmenge 18 in einem Kompressor 19 nachkomprimiert und über ein Regelorgan 20 in die Brennkammer 3 eingegeben. Parallel dazu strömt auch ein über ein Regelorgan 22 entsprechend abgestimmter Brennstoff 21, der vorzugsweise Erdgas ist, oder auch andere Kohlenwasserstoffe oder CO oder Gemische derselben, in die Brennkammmer 3, wobei mit der zugegebenen Sauerstoffmenge 18 die kalorische Aufbereitung des komprimierten und durch die Strömung im Rekuperator thermisch aufbereiteten Umlaufgases 41 bewerkstelligt wird. Das aus der Brennkammer kommende Heissgas 9 wird anschliessend in die nachgeschaltete Turbine 2 entspannt. Im Sinne des hier gezeigten geschlossenen Kreislaufes werden die aus der Turbine 2 abströmenden Abgase 7, wie bereits oben kurz erwähnt, durch einen Rekuperator 8 geleitet, bevor sie wieder der bereits beschriebenen Kompression zugeführt werden. Stromab des genannten Rekuperators 8 wird das vorgekühlte Umlaufgas 23 mit einer Temperatur von 195°-245° C durch eine Wärmesenke 24 geleitet, in welcher eine Wassermenge ausgeschieden wird, wobei das hier anfallende Wasser 25 über ein Regelorgan 26 abgeleitet wird. Diese Wärmesenke wird dabei mindestens auf Umgebungstemperatur betrieben. Die vorliegende Schaltung nach Fig. 1 zeigt des weiteren eine Startmöglichkeit des Kreislaufes, welche darin besteht, den Kreislauf zuerst mit CO₂ 27 über ein Regelsystem 28 zu füllen, und dann anzufahren. Diese Zuleitung wird hier stromab des Rekuperators 8 und stromauf der Wärmesenke 24 angesiedelt. Die hier gezeigte Schaltung weist ferner eine zusätzliche Entnahme einer weiteren Menge 29 des Kreislaufmediums 10 niederdruckseitig an geigneter Stelle aus dem Rekuperator 8 zur geregelten Beaufschlagung 32 eines Expanders 30 auf. Das abgeführte entspannte Kreislaufmedium 31 lässt sich beispielsweise wieder in den Kreislauf zurückführen; möglich ist hier auch eine Kondensation desselben. Über diesen Expander 30 lässt sich beispielsweise ein optimaler Druck für die Aufladung des Kreislaufes erzielen, wobei in einem solchen Fall eine Mengeregelung vorzusehen ist.

Bei der hier gezeigten Schaltung handelt es sich streng genommen um einen quasigeschlossenen Kreislauf, der druckfest ausgebildet ist, wobei bei verschiedenen Betriebsarten auch eine vakuumfeste Kreislaufführung möglich ist. Durch Drosseln oder Oeffnen eines in der Leitung 12 plazierten Überschussgasventils 13 lädt sich der Kreislauf von selbst auf oder ab, wobei der umlaufende Massenstrom und die Leistung entsprechend steigen oder sinken. Beim Öffnen dieses Ventils 13 sinkt der Druck im Kreislauf, wobei Unterdruck in der Rückführung erzeugt werden kann. Die Anlage hat im ganzen Druckbetrieb etwa einen konstanten Wirkungsgrad, also bei einem Auslegungsdruckbereich bezogen auf die Rückführung von 0,5 bis 5 bar im Leistungsbereich von 10-100%. Im tieferen Druckbereich sinkt die Kondensationstemperatur in der Wärmesenke 24, was den Wirkungsgrad noch leicht ansteigen lässt. Die von stationären Gasturbinen her bekannte unangenehme Leistungseinbusse mit zunehmender Aufstellungshöhe und mit zunehmender Ansaugtemperatur wird damit umgangen. Wird die Anlage allenfalls mit Überschussabgabe an die Atmosphäre betrieben, so wird der Gesamtwirkungsgrad noch verbessert, indem dessen Überdruck noch in einer Turbine mit zusätzlicher Leistungsabgabe genutzt wird. Hierzu wird im einzelnen auf die Beschreibung der nachfolgenden Figuren verwiesen. Es soll nicht unerwähnt bleiben, dass dieser Prozess sich durch besondere Einfachtheit, d.h. kostengünstigste Realisierbarkeit, auszeichnet, und ein hohes Wirkungsgradpotential aufweist. Er ist auch für die Aufladung noch besser geeignet als ein Prozess mit Abwärmenutzung durch einen Wasser/Dampf-Kreislauf, da das Verhältnis der Wärmekapazitäten im Rekuperator vom Aufladeverhältnis unabhängig ist. Ein grosser Vorteil dieses Prozesses ist ferner darin zu sehen, dass er schon bei kleinen Druckverhältnissen, im Bereich von 4-10 bar, sein Wirkungsgradoptimum hat. Kleine Druckverhältnisse begünstigen hohe Komponenten-Wirkungsgrade und kleine innere Leckagen.

Fig. 2 unterscheidet sich gegenüber Fig. 1 darin, dass der benötigte Sauerstoff 38 zum Betrieb der Verbrennung aus einer Separationsanlage 37 kommt und zumindest bei einer aufgeladenen Betriebsweise in einem Sauerstoffverdichter 39 auf einen höheren Druck verdichtet wird. Der Sauerstoffverdichter 39 selbst wird mit einer Turbine 30 angetrieben, welche ihrerseits mit einem über ein Regelorgan 36 herangeführten Überschussgas 35 beaufschlagt wird, wobei dieses niederdruckseitig unmittelbar stromab des Rekuperators 8 abgezweigt wird. Je nach Aufladungsgrad und Temperatur kann diese Entnahme resp. Abzweigung an geeigneter Stelle niederdruckseitig innerhalb des Rekuperators 8 vorgenommen werden. Das entspannte Überschussgas 31 aus der Turbine 31 kann dann zu weiteren Zwecken eingesetzt werden. Hierzu wird auf die Ausführungen unter Fig. 1 hingewiesen. Bei der Separationsanlage 37 kann es sich um eine kryotechnische Luftzerlegungsanlage handeln, wobei dann der flüssige Brennstoff mit einer Pumpe, welche wenig Leistung braucht, auf den erforderlichen Druck gebracht und dann erwärmt wird. Diese Erwärmung kann mit Umgebungswärme, der Abwärme des Rekuperators 8 oder im Rekuperator 8 selbst erfolgen. Im vorliegenden Fall wird ein im Verdichter 39 komprimierter Verbrennungssauerstoff 40 dem komprimierten Kreislaufmedium 10, stromab der Kühlfluidentnahme 11, beigegeben, falls dieser Sauerstoff 40 nicht direkt in die Brennkammer 3 eingegeben wird. Diese Lösung zeichnet sich dadurch aus, dass sie einen höheren Wirkungsgrad zur Folge hat. Eine weitere Möglichkeit der Sauerstoffzugabe, vorzugsweise ohne Erwärmung, besteht darin, diesen Verbrennungssauerstoff 33 niederdruckseitig in den Kreislauf einzubringen. In der Fig. 2 betrifft dies Leitung 33 mit Regelorgan 34. Eine weitere Möglichkeit betreffend Sauerstoffzuführung lässt sich bewerkstelligen, indem der vorverdichtete Sauerstoff auf dem Ansaugdruckniveau des Kreislaufmediums in die Leitung 6 eingegeben wird. Ein solcher Verbrennungssauerstoff lässt sich ohne weiteres ebenfalls über die Leitung 33 bewerkstelligen, allenfalls über eine weitere in der Figur nicht näher gezeigte Leitung. Der Vorteil besteht hier, dass kein separater Sauerstoffverdichter vorzusehen ist, womit eine automatische Teilnahme des eingegebenen Verbrennungssauerstoffes an der Rekuperations-Wärmeaufnahme stattfindet.

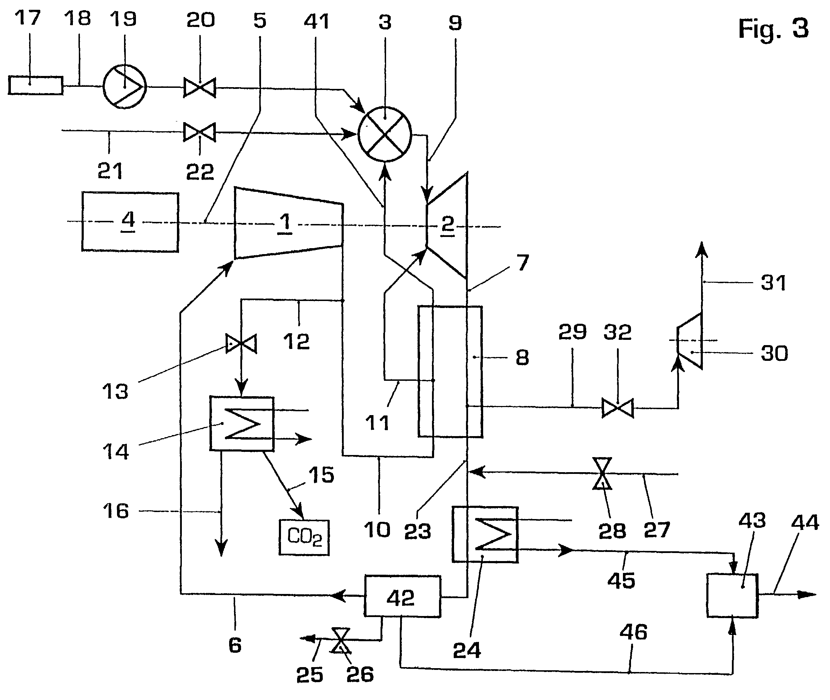

Fig. 3 baut weitgehend auf Fig. 1 auf. Der Unterschied liegt hier darin, dass der ersten auf Umgebungstemperatur arbeitenden Wärmesenke 24 eine zweite Wärmesenke 42 nachgeschaltet wird, welche die Funktion eines sogenannten "Chiller" (= Nachkühler) übernimmt. Diese zweite Wärmesenke 42 wird unterhalb der Umgebungstemperatur betrieben, wobei die Wasserabscheidung 25 nunmehr aus dieser zweiten Wärmesenke 42 stattfindet. In Wirkverbindung mit der ersten und zweiten Wärmesenke operiert eine Kältemaschine 43, deren Betrieb einerseits durch die thermische Enegie 45 aus der ersten Wärmesenke 24 aufrechterhalten wird. Andererseits wird diese Kältemaschine mit Wärmeenergie 46 tieferer Temperatur aus der zweiten Wärmesenke 42 gespeist. Aus dem Betrieb dieser Kältemaschine 43 folgt dann eine Wärmeabgabe 44 mittlerer Temperatur zu weiteren Zwecken. Dadurch, dass die zweite Wärmesenke 42 in Wirkverbindung mit der genannten Kältemaschine 43 steht,erfährt das in den Verdichter 1 eintretende Kreislaufmedium 6 eine Abkühlung, so dass die Kompressorleistung reduziert und den Wirkungsgrad direkt erhöht wird, da der Wärmebedarf wegen des rekuperativen Schrittes unverändert bleibt. Der Leistungsbedarf der Kältemaschine ist dabei nur ein kleiner Bruchteil der wirkungsgradbedingten Leistungserhöhung. Bei der Kältemaschine 43 kann es sich um einen Absorptionsprozess oder um einen klassischen Prozess mit einem Kompressor handeln. Beispielsweise bei einem Verdichter-Druckverhältnis von 8 reduziert sich die Verdichterleistung bei einer Temperaturreduktion um 3.2° C um jeweils 1 %. Eine Temperaturreduktion um 20-40° C ergibt eine Reduktion der Verdichterleistung um 6-12%. Der nachträgliche Einbau der zweiten Wärmesenke 42 ist jederzeit mit einem geringen Aufwand möglich.

Die Varianten nach Fig. 1-3 sind besonders auch geeignet für niedrigkalorische und/oder aschehaltige Brennstoffe, beispielsweise Schweröle, Kohlestaub-Wassergemische, LBTU-, MBTU-Gase, etc. Bei niedrigkalorischen Brennstoffen steigt die Temperatur nach dem Rekuperator, so dass die Nutzung in einem Dampf- oder Kalina-Prozess ihre Vorteile hat. Dabei werden dann mit solchen Brennstoffen sehr hohe Wirkungsgrade erreicht.

Bei aschehaltigen Brennstoffen ist eine Reinigungsstufe des Umlauffluides vor oder nach einer Wärmesenke 24 nötig. Denkbar ist hier ein Zyklonenabscheider vor dem Nachkühler und eine Ausbildung des Nachkühlers als Sprühkühler. Damit wird eine kompakte Bauweise und gleichzeitig eine gute Aschepartikel-Abscheidung erzielt. Das abgeschiedene Wasser 25 kann in bekannter Art wiederaufbereitet und wiederverwendet werden, wobei bei wasserstoffhaltigen Brennstoffen ein Wasserüberschuss entsteht, der in ariden Gebieten sehr erwünscht ist.

Die besondere Eignung der Schaltungen nach den Fig. 1-3 für aschehaltige Brennstoffe entsteht dadurch, dass bei einer nur zweistufigen Turbine einerseits eine staubtolerante Gestaltung erleichtert wird, und anderseits , dass die bei Aufladung höhere Dichte eine höhere Schleppwirkung auf die Partikel ausübt, was zu weniger Ablagerungen führt.

Die Gasturbogruppe gemäss einer der Figuren 1-3 lässt sich ohne weiteres durch eine sequentiell befeuerte Anlage gemäss EP-0 620 362 A1 ersetzen.

Die Aggregate der Kraftwerksanlage, wie Verdichter 1, Turbine 2, Rekuperator 8 und Wärmesenke 24 werden erfindungsgemäss in einen Druckbehälter untergebracht. Das gekühlte Kreislaufmedium 6 strömt dabei innerhalb des Druckbehälters in geeigneter Weise zum Verdichter 1 zurück. Mit dieser Massnahme wird erreicht, dass der Rekuperator 8 auf der heissen Seite nur für die eigenen Druckabfälle ausgelegt werden muss, und nicht für den Aufladedruck in der Leitung 6, da letzterer von dem inhärent kalten Druckbehälter aufgenommen wird. Ausserdem wirkt der Druckbehälter auch noch als zusätzliche Nachkühlfläche.
Eine weitere Möglichkeit dieser Grundidee besteht darin, den Generator 4 ebenfalls in dem Druckbehälter unterzubringen. Damit wird erreicht, dass keine bewegliche Wellendichtung gegen den Aufladedruck nötig ist, sowie dass der Generator 4 in einer gegebenenfalls nachgefilterten CO₂-Atmosphäre laufen kann. Infolge der bei aufgeladenem Betrieb erhöhten Wärmeübergänge kann der Generator 4 kleiner gebaut werden und direkt mit dem zirkulierenden CO₂ gekühlt werden. Das übliche separate Kühlsystem wird dabei eingespart. Die Kühlwirkung steigt bei diesem System mit der Leistung, welche zum Aufladedruck proportional ist, während die Ventilationswiderstände bei tiefem Aufladedruck kleiner werden und dadurch einen hohen Teillastwirkungsgrad ergibt.
Das ganze Modul im Druckbehälter kann in oder unter Wasser schwimmend fest verankert und angeordnet werden. Dadurch wird die meist tiefere Wassertemperatur an vielen Aufstellorten zusätzlich zur Kühlung benutzt; darüber hinaus werden Fundamente gespart.
Der Druckbehälter weist Zugangsöffnungen für den Service auf, sowie Ventilationseinrichtungen zum Ausspülen des CO₂ vor der Begehung.
Soweit der Generator 4 nicht im Druckbehälter untergebracht ist, werden für die austretende Rotorwelle 5 geeignete Dichtungen vorgesehen.

### Bezugszeichenliste

- 1: Verdichter, Verdichtereinheit
- 2: Turbine
- 3: Brennkammer
- 4: Generator
- 5: Rotorwelle
- 6: Angesaugtes Kreislaufmedium, Umlaufgas, Umlauffluid, CO₂
- 7: Abgase aus der Turbine
- 8: Rekuperator
- 9: Heissgase aus der Brennkammer
- 10: Komprimiertes Kreislaufmedium
- 11: Nebenstrom aus verdichtetem Kreislaufmedium für Kühlung
- 12: Nebenstrom aus verdichtetem Kreislaufmedium für Kondensierung
- 13: Ventil, Regelorgan
- 14: Kühler
- 15: Verflüssigter CO₂-Massenstrom
- 16: Parasitische Gase
- 17: Luftzerlegungsanlage
- 18: Sauerstoffmenge
- 19: Kompressor
- 20: Regelorgan
- 21: Brennstoff, Brenngas, CH₄
- 22: Regelorgan
- 23: Vorgekühltes Kreislaufmedium
- 24: Wärmesenke
- 25: Anfallendes Wasser
- 26: Regelorgan
- 27: CO₂-Zuleitung in den Kreislauf zum Starten
- 28: Ventil, Regelorgan
- 29: Niederdruckseitige Entnahme einer Menge des Kreilaufmediums aus 8
- 30: Expander
- 31: Abgeführtes entspanntes Kreislaufmedium
- 32: Ventil, Regelorgan
- 33: Verbrennungssauerstoff niederdruckseitig eingegeben
- 34: Ventil, Regelorgan
- 35: Überschussgas
- 36: Ventil, Regelorgan
- 37: Sauerstoff-Separationanlage
- 38: Sauerstoff
- 39: Sauerstoffverdichter
- 40: Verbrennungsauerstoff hochdruckseitig eingegeben.
- 41: Verdichtetes und thermisch aufbereitetes Umlaufgas/Kreislaufmedium
- 42: Zweite Wärmesenke (Chiller)
- 43: Kältemaschine
- 44: Wärmeabgabe aus der Kältemaschine
- 45: Thermische Energie aus der ersten Wärmesenke
- 46: Wärmeenergie tiefer Temperatur aus der zweiten Wärmesenke

## Patentansprüche

1. Kraftwerksanlage, wobei die Kraftwerksanlage in einem geschlossenen oder quasigeschlossenen CO₂-Kreislauf betreibbar ist, und wobei die Kraftwerksanlage im wesentlichen aus mindestens einem Generator (4), einer Verdichtereinheit (1), einer Brennkammer (3), einer Turbine (2), einem Rekuperator (8), einer stromauf des Rekuperators (8) angeordneten Auskondensierungsanlage (14) und einer Wärmesenke (24) besteht,
**dadurch gekennzeichnet, dass**
die zum Gasturbinenprozess gehörenden Aggregate (1, 2, 3, 8, 24) in einem gemeinsamen Druckbehälter untergebracht sind.

2. Kraftwerksanlage nach Anspruch 1, **dadurch gekennzeichnet, dass** der Generator (4) ebenfalls im Druckbehälter untergebracht ist.

3. Kraftwerksanlage nach Anspruch 2, **dadurch gekennzeichnet, dass** der Druckbehälter Zugangsöffnungen aufweist.

4. Kraftwerksanlage nach Anspruch 1, **dadurch gekennzeichnet, dass** der Druckbehälter Ventilationseinrichtungen zum Ausspülen des CO₂ aufweist.

## Claims

1. Power station plant, the power station plant being operable in a closed or virtually closed CO₂ cycle, and the power station plant essentially comprising at least one generator (4), one compressor unit (1), one combustion chamber (3), one turbine (2), one recuperator (8), a condensing plant (14) arranged upstream of the recuperator (8) and one heat sink (24), **characterized in that** the units (1, 2, 3, 8, 24) belonging to the gas-turbine process are accommodated in a common pressure vessel.

2. Power station plant according to Claim 1, **characterized in that** the generator (4) is likewise accommodated in the pressure vessel. ,

3. Power station plant according to Claim 2, **characterized in that** the pressure vessel has access openings.

4. Power station plant according to Claim 1, **characterized in that** the pressure vessel has ventilation devices for expelling the CO₂.

## Revendications

1. Centrale d'énergie, dans laquelle la centrale peut fonctionner dans un cycle de CO₂ fermé ou quasiment fermé, et dans laquelle la centrale se compose essentiellement d'au moins un générateur (4), d'une unité de compresseur (1), d'une chambre de combusion (3), d'une turbine (2), d'un récupérateur (8), d'une installation de condensation (14) disposée en amont du récupérateur (8) et d'un dissipateur de chaleur (24) ,
**caractérisée en ce que**
les unités (1, 2, 3, 8, 24) appartenant au processus de la turbine à gaz sont montées dans un récipient sous pression commun.

2. Centrale d'énergie selon la revendication 1, **caractérisée en ce que** le générateur (4) est également monté dans le récipient sous pression.

3. Centrale d'énergie selon la revendication 2, **caractérisée en ce que** le récipient sous pression présente des ouvertures d'accès.

4. Centrale d'énergie selon la revendication 1, **caractérisée en ce que** le récipient sous pression présente des dispositifs de ventilation pour l'évacuation du CO₂.
